(19) Europäisches Patentamt
European Patent Office
Office européen des brevets

(11) **EP 2 292 903 B1**

(12) **FASCICULE DE BREVET EUROPEEN**

(45) Date de publication et mention
de la délivrance du brevet:
**26.11.2014  Bulletin 2014/48**

(51) Int Cl.:
*F01N 3/025* *(2006.01)*      *F01N 9/00* *(2006.01)*

(21) Numéro de dépôt: **10290343.2**

(22) Date de dépôt: **24.06.2010**

(54) **Procéde et système pour contrôler la régénération active d'un filtre à particules Diesel**

Verfahren und System zur Steuerung der Regeneration eines Partikelfilters

Method and system for controlling the active regeneration of a particle filter

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **15.07.2009  FR 0903475**

(43) Date de publication de la demande:
**09.03.2011  Bulletin 2011/10**

(73) Titulaire: **IFP Energies nouvelles**
**92852 Rueil-Malmaison Cedex (FR)**

(72) Inventeurs:
• **Lepreux, Olivier**
  **69390 Meyzieu (FR)**
• **Creff, Yann**
  **38138 Les côtes d'Arey (FR)**
• **Petit, Nicolas**
  **92330 Sceaux (FR)**

(56) Documents cités:
**EP-A1- 1 832 728          FR-A1- 2 921 416**
**US-A1- 2005 086 929      US-A1- 2007 000 238**
**US-A1- 2008 155 965**

## Description

Le domaine d'application principal de l'invention est le traitement des gaz d'échappement des moteurs Diesel. En particulier la méthode concerne le contrôle de la température en aval d'un catalyseur d'oxydation. En particulier le contrôle de cette température sert à assurer la régénération active d'un filtre à particules.

## État de la technique

Tel qu'on le sait dans l'art antérieur, les véhicules Diesel soumis aux normes sur les émissions polluantes sont ou vont être équipés de filtres à particules pour satisfaire ces normes. Les suies s'accumulent sur les parois du filtre à particules. Pour assurer la bonne circulation des gaz dans le système d'échappement et donc le bon fonctionnement du moteur, ces suies doivent être brûlées régulièrement lors d'une période de « régénération active ». Cette régénération active se fait en élevant la température du filtre à particules. Dans la plupart des configurations, cette élévation de température est réalisée à l'aide de l'oxydation d'hydrocarbures injectés dans le système d'échappement : un catalyseur d'oxydation est placé en amont d'un filtre à particules ; les hydrocarbures peuvent notamment être fournis par le système d'injection principal du moteur ou par un injecteur spécifique localisé entre le collecteur d'échappement et l'entrée du catalyseur d'oxydation.

Dans le système de post-traitement des moteurs Diesel comprenant un filtre à particules, il est très important de bien maîtriser la température du gaz entrant dans le filtre à particules sous peine de risquer de détériorer ce filtre. Il est donc très important de maîtriser la température du gaz sortant du catalyseur d'oxydation.

Le problème technique est le suivant. Il s'agit de maintenir, pendant les périodes de régénération active, la température du catalyseur d'oxydation proche d'une température de consigne dans toutes les conditions d'utilisation du véhicule. Lors de l'utilisation du véhicule, les conditions externes imposées au catalyseur d'oxydation sont rapidement et fortement variables. Pour cette raison, il est difficile de résoudre le problème mentionné ci-dessus.

Des méthodes actuellement utilisées existent pour résoudre ce problème.

La méthode la plus couramment utilisée consiste à calibrer un contrôleur classique (PI, PID, prédicteur de Smith, modèle interne, ...). Cette calibration est effectuée pour une combinaison importante de conditions opératoires stationnaires. Lors de l'utilisation du contrôle, les conditions opératoires sont détectées et les paramètres correspondants du régulateur sont appliqués.

A cette méthode, un terme de précompensation est couramment ajouté. Ce terme est évalué notamment en fonction de la différence entre la température d'entrée et la température de consigne, comme décrit dans le document US 7,047,729 B2.

Une méthode similaire est également connue du document FR 2921416.

Cependant, les méthodes actuelles présentent certaines limitations de performance car : elles ne tiennent pas compte finement des différences phénoménologiques entre l'effet des hydrocarbures sur le catalyseur d'oxydation et l'effet de la température en amont du catalyseur d'oxydation ; elles prennent en compte de façon limitée l'aspect dynamique des effets liés aux variations de débit de gaz ; elles prennent en compte de façon limitée les variations de débit de gaz pour l'adaptation dynamique des paramètres du contrôleur. De plus, les méthodes actuelles présentent des limitations en termes d'effort de calibration, car elles n'expriment pas les paramètres du contrôleur à partir de grandeurs issues de la modélisation physique du catalyseur d'oxydation.

L'objet de l'invention est un procédé alternatif de traitement de gaz d'échappement d'un moteur à combustion interne, dans lequel on contrôle la régénération active d'un filtre à particule au moyen d'un contrôle dynamique de la température en sortie d'un catalyseur d'oxydation. Le procédé s'affranchit des limitations des méthodes antérieures au moyen d'une loi de commande comportant :

- un terme prenant en compte des phénomènes transitoires ayant lieu dans le catalyseur d'oxydation lors d'une variation de débit de gaz, ou

- un terme de précompensation prenant en compte les différences de dynamiques entre l'effet de la perturbation de la température en entrée du catalyseur d'oxydation et l'effet de la commande de l'injection d'hydrocarbures en amont du catalyseur d'oxydation,

- ou un terme de rétroaction basé sur une modélisation physique du catalyseur d'oxydation permettant l'expression des paramètres du contrôleur en fonction des paramètres du modèle physique et prenant en compte de manière dynamique l'adaptation des paramètres du contrôleur lors des variations des conditions de fonctionnement,

- ou toute combinaison de ces trois termes.

L'invention concerne également un moteur à combustion interne comprenant un système de contrôle adapté à la mise en oeuvre des procédés selon l'invention.

**La méthode selon l'invention**

Un objet de l'invention concerne un procédé de traitement de gaz d'échappement d'un moteur à combustion interne équipé d'un filtre à particules et d'un catalyseur d'oxydation placé en amont du filtre, dans lequel on contrôle la régénération active du filtre au moyen d'un contrôle dynamique d'une température $T2$ du gaz sortant du catalyseur d'oxydation. Le procédé comporte les étapes suivantes :

  i- on détermine une température de consigne $Tc$ dudit gaz sortant dudit catalyseur pour assurer une régénération active dudit filtre ;

  ii- on détermine une demande de température nécessaire pour contrôler ladite température $T2$ ;

  iii- on détermine un gain stationnaire $G$, défini comme le rapport entre la valeur stationnaire d'une variation de $T2$ et une valeur stationnaire d'une variation de débit massique d'hydrocarbures ayant induit ladite variation de $T2$ ;

  iv- on corrige ledit gain $G$ de façon à prendre en compte une variation de débit de gaz en entrée dudit catalyseur, le gain étant transitoirement diminué par rapport à G pour une augmentation de débit de gaz et transitoirement augmenté par rapport à G pour une diminution de débit de gaz ;

  v- on définit une loi de commande d'un débit d'hydrocarbures en entrée dudit catalyseur d'oxydation, par le rapport entre ladite demande de température et ledit gain corrigé ;

  vi- on modifie le débit d'hydrocarbures en appliquant la loi de commande pour que la température dudit gaz sortant dudit catalyseur respecte ladite température de consigne.

Selon ce procédé, on peut corriger le gain $G$ en calculant une dérivée du débit de gaz traversant le catalyseur, ou alors, en appliquant un retard au gain selon la formule suivante :

$$Ginst(t) = G\big(t - D(t)\big)$$

avec $Ginst$ le gain corrigé, $D$ le retard déterminé en fonction du débit de gaz $Q$ et de ses variations, $t$ le temps.

Un objet de l'invention concerne un second procédé de traitement de gaz d'échappement d'un moteur à combustion interne équipé d'un filtre à particules et d'un catalyseur d'oxydation placé en amont du filtre, dans lequel on contrôle la régénération active du filtre au moyen d'un contrôle dynamique d'une température $T2$ du gaz sortant du catalyseur d'oxydation. Le procédé comporte les étapes suivantes :

  i- on détermine une demande de température $TFF$ nécessaire pour compenser un effet d'une variation de température $T1$ dudit gaz en entrée dudit catalyseur, $TFF$ étant une fonction d'une différence entre $T1(t - \delta(t))$ et une valeur de référence $Tbar$, où $T1(t - \delta(t))$ est une expression d'une mesure de $Tl(t)$ retardée d'un retard de valeur $\delta(t)$;
  ii- on détermine un gain stationnaire $G$, défini comme le rapport entre la valeur stationnaire d'une variation de $T2$ et une valeur stationnaire d'une variation de débit massique d'hydrocarbures ayant induit ladite variation de $T2$, tous les autres paramètres restants constants par ailleurs ;
  iii- on définit une loi de commande $uFF$ d'un débit d'hydrocarbures en entrée dudit catalyseur d'oxydation, par le rapport entre ladite demande de température $TFF$ et ledit gain ;
  iv- on modifie le débit d'hydrocarbures en appliquant la loi de commande pour que la température dudit gaz sortant dudit catalyseur respecte ladite demande de température $TFF$.

Selon ce second procédé, le retard $\delta$ peut être défini en fonction d'un retard $\delta 2$ obtenue en résolvant l'équation implicite suivante :

$$L - Lu = \int_{t-\delta 2(t)}^{t} v(w)dw$$

avec

L : une longueur du catalyseur d'oxydation.

Lu : une longueur de catalyseur d'oxydation permettant de rapprocher au mieux d'une part une réponse indicielle normalisée à une variation de *T1* sur un catalyseur de longueur *Lu*, et d'autre part une réponse indicielle normalisée à une variation de débit d'hydrocarbures sur un catalyseur d'oxydation de longueur *L*.

v : une vitesse moyenne du gaz dans ledit catalyseur d'oxydation.

Selon ce second procédé, on peut corriger le gain *G* de façon à prendre en compte une variation de débit de gaz en entrée dudit catalyseur, le gain étant transitoirement augmenté par rapport à *G* pour une augmentation de débit de gaz et transitoirement diminué par rapport à *G* pour une diminution de débit de gaz.

Un objet de l'invention concerne un troisième procédé de traitement de gaz d'échappement d'un moteur à combustion interne équipé d'un filtre à particules et d'un catalyseur d'oxydation placé en amont du filtre, dans lequel on contrôle la régénération active du filtre au moyen d'un contrôle dynamique d'une température T2 du gaz sortant du catalyseur d'oxydation. Le procédé comporte les étapes suivantes :

i- on détermine une température de consigne *Tc* dudit gaz sortant dudit catalyseur pour assurer une régénération active dudit filtre ;

ii- on détermine une demande de température *TFB* nécessaire pour que la température *T2* dudit gaz sortant dudit catalyseur respecte ladite température de consigne *Tc*, ladite demande *TFB* étant calculée à partir d'un contrôleur dont les paramètres sont déterminés au moyen d'un modèle physique du catalyseur d'oxydation, basé sur un bilan d'énergie d'une phase gaz et un bilan d'énergie d'une phase solide, en fonction des conditions opératoires du moteur ;

iii- on détermine un gain stationnaire *G*, défini comme le rapport entre la valeur stationnaire d'une variation de *T2* et une valeur stationnaire d'une variation de débit massique d'hydrocarbures ayant induit ladite variation de *T2;*

iv- on définit une loi de commande *uFB* d'un débit d'hydrocarbures en entrée dudit catalyseur d'oxydation, par le rapport entre ladite demande de température *TFF* et ledit gain ;

v- on modifie le débit d'hydrocarbures en appliquant la loi de commande pour que la température dudit gaz sortant dudit catalyseur respecte ladite température de consigne.

Selon ce troisième procédé, on peut corriger le gain *G* de façon à prendre en compte une variation de débit de gaz en entrée dudit catalyseur, le gain étant transitoirement augmenté par rapport à *G* pour une augmentation de débit de gaz et transitoirement diminué par rapport à *G* pour une diminution de débit de gaz.

Selon l'invention, la loi de commande appliquée pour modifier le débit d'hydrocarbures peut être définie par la somme des lois de commande *uFF* et *uFB.* Ces lois de commandes peuvent être définies à partir d'un gain corrigé de façon à prendre en compte une variation de débit de gaz en entrée dudit catalyseur, le gain étant transitoirement augmenté par rapport à *G* pour une augmentation de débit de gaz et transitoirement diminué par rapport à *G* pour une diminution de débit de gaz.

Enfin, un autre objet de l'invention concerne un moteur à combustion interne comprenant un système de traitement de gaz d'échappement, un catalyseur d'oxydation (15) placé en amont d'un filtre à particules (16), et un système d'injection (80) agissant dans le moteur. Le moteur comporte un système de contrôle (50) pour piloter le système d'injection de façon à fournir un débit d'hydrocarbures en amont du catalyseur d'oxydation, en accord avec un des procédés précédemment décrits.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 décrit un moteur à combustion interne selon l'invention, comprenant un système de traitement de gaz d'échappement.

- La figure 2 présente sommairement le système à commander et des variables utilisées.

- La figure 3 est une présentation schématique du contrôleur utilisé par la méthode selon l'invention.

- La figure 4 illustre schématiquement un contrôleur avec modèle interne $MU$ utilisé alternativement dans la méthode selon l'invention.

- La figure 5 illustre schématiquement un contrôleur de type prédicteur de Smith représentant un cas particulier du contrôleur présenté sur la figure 4.

- La figure 6 illustre schématiquement un contrôleur avec modèle interne $M$ utilisé alternativement dans la méthode selon l'invention.

- La figure 7 illustre les différences entre la réponse à une variation de température $T1$ en amont du catalyseur d'oxydation et la réponse à une variation de débit d'hydrocarbures.

- La figure 8 montre une comparaison d'une réponse à des variations de température $T1$ sur une longueur fictive et à une réponse des variations de débit d'hydrocarbures.

- La figure 9 illustre la stratégie de synchronisation selon l'invention.

- La figure 10 montre l'évolution du rendement de conversion des hydrocarbures en fonction du débit de gaz.

- La figure 11 illustre l'évolution du débit d'hydrocarbures $u$ à appliquer lors d'une variation de débit de gaz.

**Description détaillée de la méthode**

Les notations suivantes sont introduites pour décrire l'invention :

$T1$ : température représentative de la température du gaz en amont du catalyseur d'oxydation (DOC).

$T2$ : température représentative de la température du gaz en aval du catalyseur d'oxydation (en amont du filtre à particule (DPF)).

$u$ : débit d'hydrocarbures en amont du catalyseur d'oxydation. Il tient compte de tous les hydrocarbures présents.

$L$ : longueur du catalyseur d'oxydation.

$Lu$ : longueur de catalyseur d'oxydation permettant de rapprocher au mieux d'une part la réponse indicielle normalisée à une variation de $T1$ sur un catalyseur de longueur $Lu$, et d'autre part la réponse indicielle normalisée à une variation de débit d'hydrocarbures sur un catalyseur d'oxydation de longueur $L$. On note que la notion de longueur différente entre $L$ et $Lu$ est équivalente à la notion de temps de réponse différent entre la réponse à une variation de $T1$ et la réponse à une variation de débit d'hydrocarbures. On considère que $Lu < L$, ce qui équivaut à dire que la réponse à une variation de $T1$ est plus lente que la réponse au débit d'hydrocarbures $u$. Ceci équivaut encore à dire que la dynamique de la réponse à un débit d'hydrocarbures sur un catalyseur de longueur L est assimilable à la dynamique de la réponse à une variation de température $T1$ sur un catalyseur de longueur $Lu$.

$k1, k2$ : valeurs caractéristiques du catalyseur d'oxydation

$Q$ : débit massique de gaz dans le catalyseur d'oxydation. Il peut être mesuré ou estimé.

$G$ :  gain stationnaire, défini comme le rapport entre la valeur stationnaire d'une variation de $T2$ et la valeur stationnaire de la variation de débit massique d'hydrocarbures $u$ ayant induit cette variation de $T2$, tous les autres paramètres restants constants par ailleurs, notamment $T1$ et $Q$.

$\nu$ :  vitesse moyenne du gaz dans les canaux du catalyseur d'oxydation.

$Kd$ :  gain défini comme le rapport entre la valeur stationnaire d'une variation de $T2$ et la valeur stationnaire de la variation de $T1$ ayant induit cette variation de $T2$.

$r$ :  rendement, défini comme le rapport entre le débit d'hydrocarbures consommés dans le catalyseur d'oxydation et le débit total d'hydrocarbures $u$ en amont du catalyseur d'oxydation.

On appelle effet d'une variation de $T1$ (ou réponse à une variation de T1), l'effet de cette variation sur la température $T2$. On appelle effet d'une variation de débit d'hydrocarbures $u$ (ou réponse à une variation de débit d'hydrocarbures $u$) l'effet de cette variation sur la température $T2$.

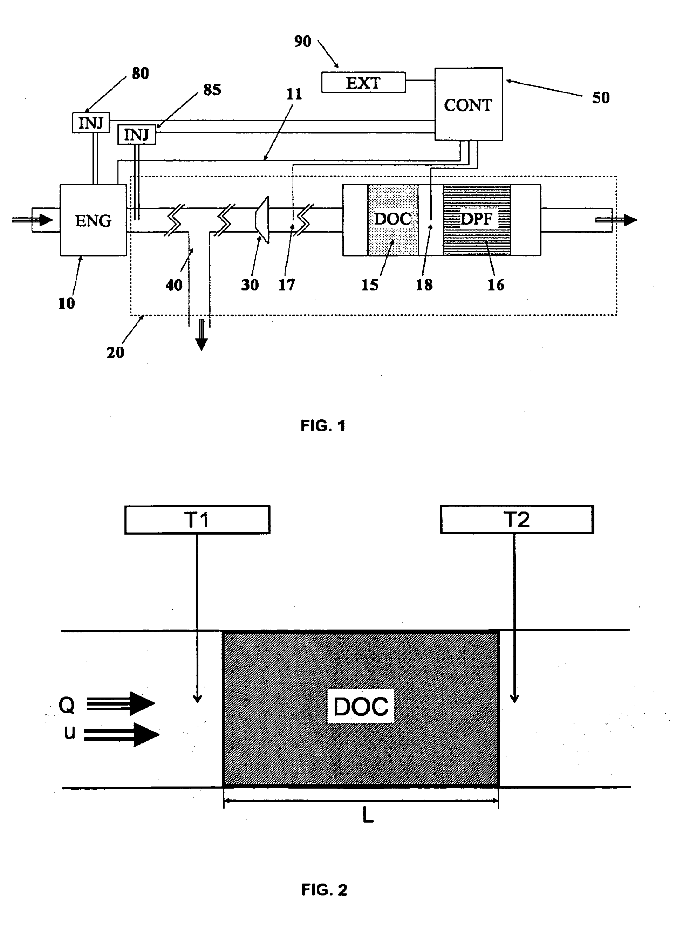

La figure 2 présente sommairement le système à commander et des variables utilisées. La méthode vise à faire tendre la température $T2$ vers une température de consigne $Tc$. La méthode modifie la valeur du débit d'hydrocarbures $u$ en amont du catalyseur d'oxydation.

L'objet de l'invention est un procédé alternatif de traitement de gaz d'échappement d'un moteur à combustion interne, dans lequel on contrôle la régénération active d'un filtre à particule au moyen d'un contrôle dynamique de la température en sortie d'un catalyseur d'oxydation. Selon l'invention, trois alternatives permettent de résoudre ce problème technique. Toutes les combinaisons entre ces alternatives étant également des objets de l'invention.

Selon une première alternative, on convertit les demandes de variation de température en une commande $u$, en prenant en compte des phénomènes transitoires ayant lieu dans le catalyseur d'oxydation via le calcul d'un gain instantané.

Selon une seconde alternative, la commande $u$ comporte un terme de précompensation $uFF$. Ce terme $uFF$ sert à précompenser les variations de température $T1$, c'est-à-dire à rendre minimal l'effet des variations de la température $T1$ sur la température $T2$. C'est une fonction non linéaire des variations de $T1$ par rapport à une référence $Tbar$ choisie arbitrairement.

Selon une troisième alternative, la commande $u$ comporte un terme de rétroaction $uFB$. Ce terme $uFB$ sert à faire tendre la température $T2$ vers la température de consigne $Tc$ par une méthode de rétroaction.

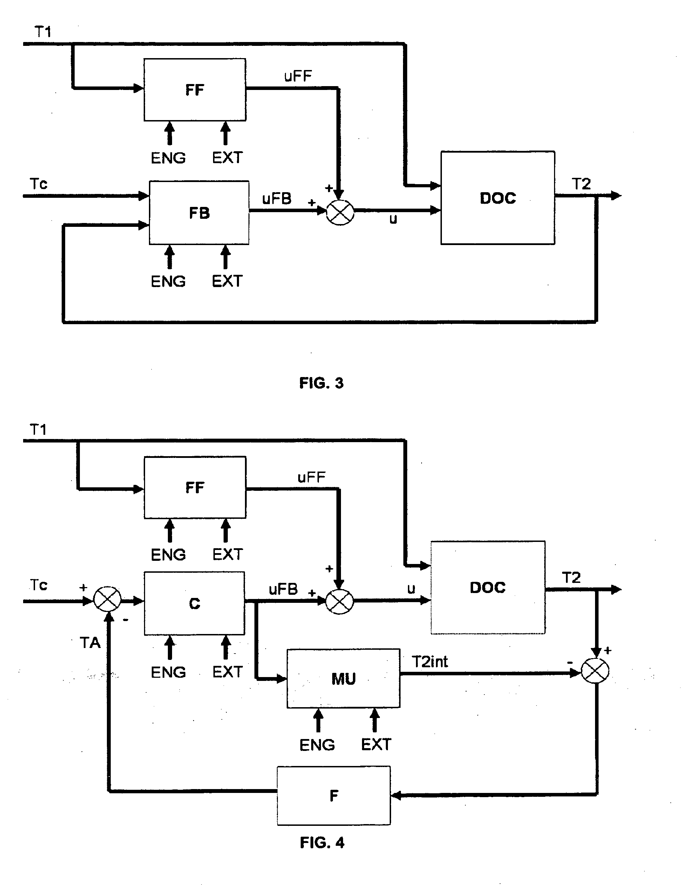

Selon une quatrième alternative, la commande $u$ se décompose en la somme du terme de précompensation $uFF$ et du terme de rétroaction $uFB$. La figure 3 est une présentation schématique du contrôleur utilisé par le procédé de l'invention selon cette alternative.

Les trois dernières alternatives peuvent être combinés avec la première alternative.

Dans toutes les alternatives, le calcul de la commande $u$ peut être adapté en fonction des conditions opératoires $ENG$ (débit d'air, régime moteur, consigne de couple, pression du rail ...) ou des conditions ambiantes $EXT$ (température extérieure,...).

### Définition du gain instantané *Ginst*

Selon une première alternative, afin de convertir les demandes de variation de température dans l'unité de commande de l'actionneur (débit massique exprimé par exemple en kg/h), la loi de commande suivante est utilisée :

$$u = \frac{T}{G}$$

avec :

- $T$ : représente la demande de température.
- $u$ : représente le débit d'hydrocarbures qu'il faut fournir pour satisfaire la demande de température $T$.
- $G$ : gain stationnaire, défini comme le rapport entre la valeur stationnaire d'une variation de $T2$ et la valeur stationnaire de la variation de débit massique d'hydrocarbures $u$ ayant induit cette variation de $T2$, tous les autres paramètres restants constants par ailleurs. Le gain G peut être évalué expérimentalement ou à partir de l'enthalpie de réaction des hydrocarbures, par exemple comme présenté en annexe 1. A chaque valeur stationnaire du débit de gaz peut correspondre une valeur de ce gain.

La valeur calculée classiquement avec le gain stationnaire ne tient pas compte des phénomènes transitoires ayant lieu dans le catalyseur d'oxydation lors des variations de débit de gaz, ce qui provoque des variations importantes de température $T2$, alors même que la température $T1$ et que la demande de température $T$ sont constantes. Les méthodes actuelles présentent des limitations de performance car elles prennent en compte de façon limitée l'aspect dynamique des effets liés aux variations de débit de gaz.

Selon une première alternative de l'invention, afin de convertir les demandes de variation de température dans l'unité de commande de l'actionneur (débit massique exprimé par exemple en kg/h), le calcul suivant est utilisé :

$$u = \frac{T}{Ginst}$$

avec :

-   $T$ : représente la demande de température.
-   $u$ : représente le débit d'hydrocarbures qu'il faut fournir pour satisfaire la demande de température $T$.
-   $Ginst$ : gain instantané à appliquer à l'instant courant. Il est basé sur le gain stationnaire G auquel on applique une correction pour pallier les effets des variations de débit de gaz Q.

Le principe général de cette correction est que, par rapport à la valeur de gain $G$ calculée classiquement, suite à des augmentations de débit de gaz Q, le gain instantané $Ginst$ est transitoirement augmenté, et en conséquence. Le débit d'hydrocarbures est transitoirement diminué par rapport à la valeur calculée classiquement. Par rapport à la valeur de gain $G$ calculée classiquement, suite à des réductions de débit de gaz Q, le gain instantané $Ginst$ est transitoirement réduit, et en conséquence, le débit d'hydrocarbures est transitoirement augmenté par rapport à la valeur calculée classiquement.

Pour réaliser ce principe général, une autre méthode proposée est de retarder l'effet du gain stationnaire selon

$$Ginst(t) = G\big(t - D(t)\big)$$

-   $Ginst$ : gain instantané à appliquer à l'instant courant.
-   $D$ : retard à l'application du gain stationnaire. Il est déterminé en fonction du débit de gaz Q et ses variations.
-   $G$ : gain stationnaire. $G(t-D(t))$ représente la valeur de $G$ retardée d'un retard de valeur $D(t)$

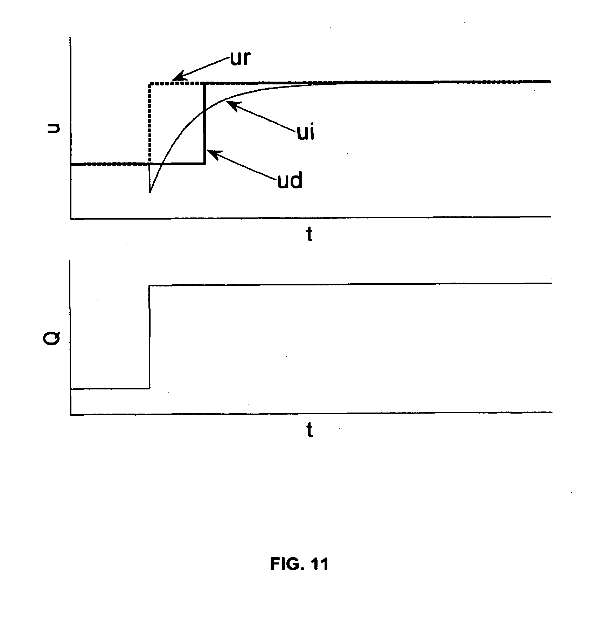

Ces deux exemples de réalisation du principe général sont schématisés dans la figure 11 pour le cas d'une augmentation de débit de gaz.

La figure 11 illustre l'évolution du débit d'hydrocarbures $u$ à appliquer lors d'une variation de débit de gaz pour une demande de température constante. La valeur $ur$ est le débit d'hydrocarbures appliqué dans le cas classique se basant sur les variations de débit Q par l'intermédiaire du gain stationnaire G. Les valeurs $ui$ et $ud$ sont des exemples de réalisation de la commande $u$ à appliquer selon l'invention, c'est-à-dire par l'intermédiaire du gain instantané $Ginst.$ Dans le cas présenté d'une augmentation de débit de gaz Q, les débits d'hydrocarbures $ui$ ou $ud$ sont inférieurs au débit d'hydrocarbures $ur$ pendant une période transitoire faisant suite à cette variation de débit de gaz Q.

**Définition du terme de précompensation *uFF***

Le terme de précompensation $uFF$ sert à compenser les effets des variations de température $T1$. Le terme $uFF$ représente un débit d'hydrocarbures ($HC$) nécessaire pour compenser les effets des variations de $T1$. Le débit d'hydrocarbure $uFF$ a pour but d'être tel que les variations de $T2$ engendrées par les variations de $T1$ soient minimales. C'est une fonction non linéaire des variations de $T1$ par rapport à une référence $Tbar$ choisie arbitrairement.

La stratégie de précompensation consiste à retarder la compensation d'un effet d'une variation de $T1,$ dans le but de synchroniser l'effet de $T1$ avec l'effet engendré par une variation du débit d'hydrocarbures $uFF.$ Le calcul du retard de synchronisation est réalisé à débit de gaz variable ($Q$).

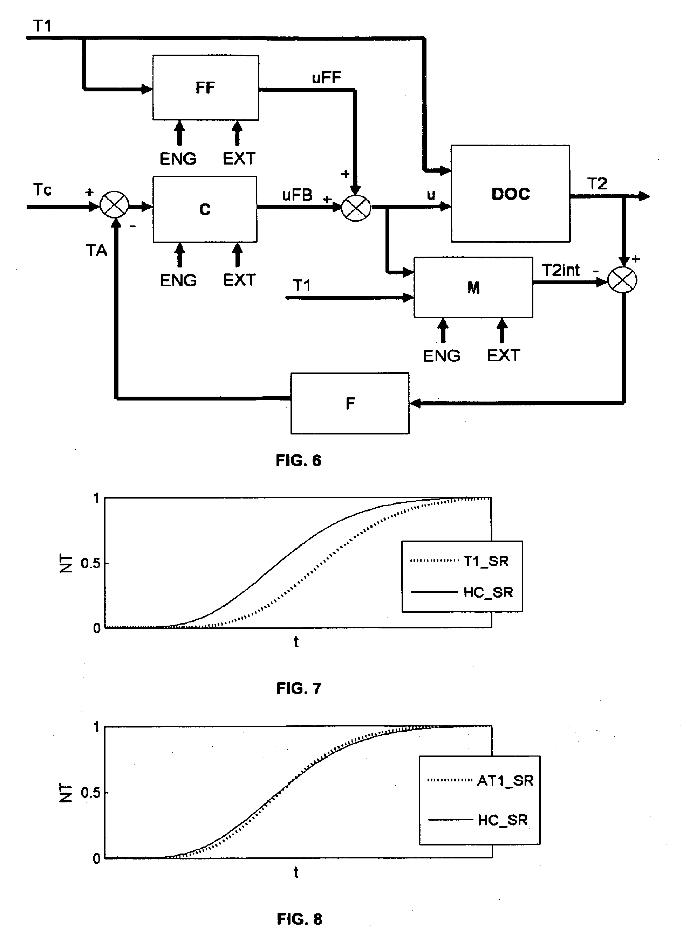

En effet, en se basant sur des modèles validés expérimentalement, on peut établir que les réponses à des variations de $T1$ et à des variations de débit d'hydrocarbure sont différentes. La figure 7 illustre ce phénomène. La figure 7 illustre des différences entre les réponses à une variation de température de $T1$ et à une variation de débit d'hydrocarbures. La valeur *T1_SR* représente la réponse indicielle à une variation de *T1*. La valeur *HC_SR* représente la réponse indicielle à une variation de débit d'hydrocarbures. La valeur *NT* est la variation normalisée de la température *T2*. La valeur *t* représente le temps.

La stratégie de précompensation de la méthode fonctionne sur le principe que la réponse *T1_SR* est plus lente que la réponse *HC_SR* et consiste à retarder la commande de débit d'hydrocarbures lors de la détection d'une variation de *T1* pour synchroniser les effets *T1_SR* avec ceux *HC_SR* afin de compenser les effets *T1_SR* par ceux de *HC_SR*.

La figure 8 montre une comparaison d'une réponse à des variations de température *T1* sur une longueur fictive et à une réponse à des variations de débit d'hydrocarbures. La valeur *AT1_SR* représente la réponse indicielle normalisée à une variation de *T1* pour un catalyseur d'oxydation ayant une longueur adaptée *Lu*. La valeur *HC-SR* représente la réponse indicielle normalisée à une variation débit d'hydrocarbures pour un catalyseur d'oxydation ayant une longueur *L, L* étant supérieure ou égale à *Lu*.

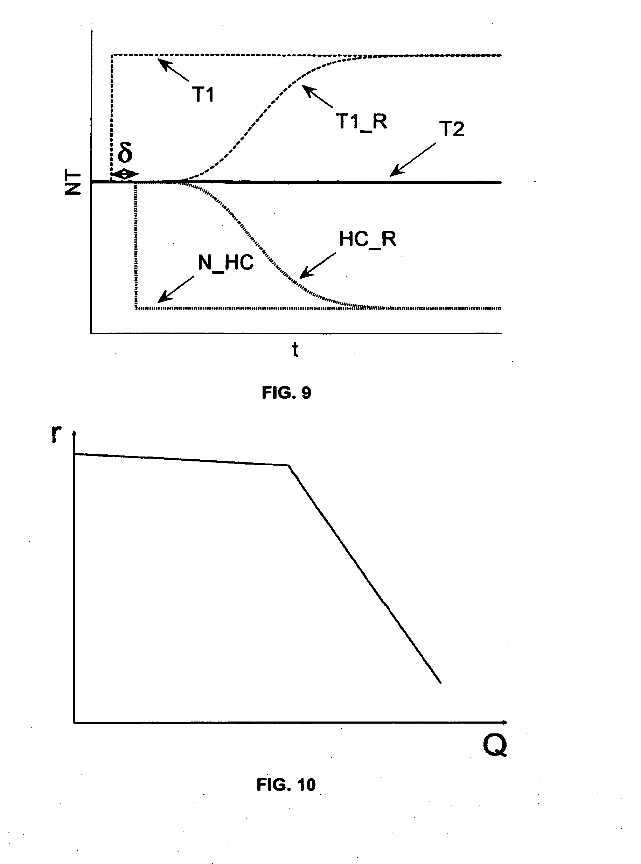

La figure 9 illustre la stratégie de synchronisation selon l'invention. La valeur *T1_R* représente l'effet de la variation de *T1* en sortie du catalyseur d'oxydation. La valeur *N_HC* représente le débit normalisé des hydrocarbures oxydés dans le catalyseur d'oxydation. La valeur *HC_R* représente l'effet de la variation de ces hydrocarbures *N_HC*. La valeur *T2* représente la température du gaz en sortie du catalyseur d'oxydation. Enfin, la valeur $\delta$ représente le retard appliqué sur la commande de débit d'hydrocarbures lors d'une variation de la température *T1*. L'utilisation de ce retard permet de rejeter l'effet *T1_R* de cette variation sur la température *T2*.

Selon l'invention, afin de convertir les demandes de variation de température dans l'unité de commande de l'actionneur (débit massique exprimé par exemple en kg/h), le calcul suivant est utilisé :

$$uFF = \frac{TFF}{GFF} = \frac{f(T1 - Tbar)}{GFF}$$

avec :

- *Tbar* : une valeur de référence quelconque. Elle peut par exemple être égale à la valeur de *T1* au moment on l'on active le contrôleur.

- *TFF* : demande de variation de température pour compenser la variation de *T1*. *TFF* est fonction de la différence entre *T1* et *Tbar*

- *GFF* : gain instantané à appliquer à l'instant courant pour convertir la demande de variation de température *TFF* en débit d'hydrocarbures *uFF*. En particulier, on peut prendre *GFF = Ginst*.

Selon un mode préféré de réalisation, on calcule le terme *TFF* comme une fonction de la différence entre *T1*(*t* - $\delta$(*t*)) et *Tbar,* où *T1*(*t* - $\delta$(*t*)) est l'expression de la mesure de *T1*(*t*) retardée d'un retard de valeur $\delta$(*t*). En particulier, *TFF* se calcule par la formule :

$$TFF = -Kd\big(T1(t - \delta(t)) - Tbar\big)$$

En particulier le retard $\delta$ se calcule sur la base d'un retard $\delta2$. La valeur $\delta2$ est obtenue en résolvant l'équation implicite suivante :

$$L - Lu = \int_{t-\delta2(t)}^{t} v(w)dw$$

Le retard $\delta$ est obtenu par une fonction linéaire ou non linéaire de $\delta2$. En particulier, on peut exprimer $\delta$ par: $\delta = a.\delta2 + b$, où *a* et *b* sont des constantes à définir. On peut prendre $\delta = \delta2$.

D'autre part, le gain *Kd* est défini comme le rapport entre la valeur stationnaire d'une variation de *T2* et la valeur stationnaire de la variation de *T1* ayant induit cette variation de *T2*. On prend préférentiellement *Kd*=1.

La valeur du gain instantané *GFF* est la valeur du gain à appliquer à l'instant courant. Cette elle peut être prise égale à la valeur du gain stationnaire *G*. Alternativement, elle peut être prise égale à la valeur du gain stationnaire *G* corrigée par une fonction de la dérivée filtrée du débit de gaz traversant le catalyseur, ou à la valeur du gain stationnaire *G* retardé, comme décrit selon le premier mode de réalisation.

Un exemple de méthode pour calculer le gain est présenté en annexe 1.

En pratique, on calcule en continu la différence entre *T1* et *Tbar*. Si cette différence est non nulle, on souhaite modifier le débit d'hydrocarbures *uFF* pour compenser cette variation de température. L'instant de modification de ce débit est cadencé par le pas de calcul du contrôleur du moteur. A chaque pas de calcul, on calcule le retard $\delta(t)$ et on cherche quelles variations de *T1* ont eu lieu à l'instant t-$\delta(t)$. Ce sont ces variations qu'on veut compenser. Pour cela, on modifie la demande de température TFF (et donc le débit *uFF*) selon ces variations de *T1* ayant eu lieu à l'instant t-$\delta(t)$.

Ainsi, lorsque l'on détecte une variation de *T1,* elle n'est pas compensée immédiatement. On "attend" un temps $\delta$ (qui n'est pas déterminé à l'instant où la variation est détectée) avant de faire varier la demande de variation de température *TFF* et donc le débit *uFF*. L'exemple ci-après illustre le principe du terme de précompensation *uFF* pour un débit de gaz Q constant:

| | | | |
|---|---|---|---|
| à *t*=0 s : | *T1*=400°C | *TFF*=0°C | *uFF*=0 kg/h (*Tbar*=*T1*=400°C) |
| à *t*=1 s : | *T1*=390°C | *TFF* =0°C | *uFF*=0 kg/h <- ici on a une variation de *T1* |
| à *t*=2s : | *T1*=390°C | *TFF* =0°C | *uFF*=0 kg/h |

...

à *t*=21 s :   *T1*=390°C

on calcule $\delta$: $\delta$=20 s. On déduit que c'est le moment de compenser la variation de *T1* ayant eu lieu à *t*=1. On trouve :

*TFF*=10°C et, par exemple, *uFF*=0.6 kg/h

à *t*=22 s :   *T1*=390°C *TFF* =10°C *uFF*=0.6 kg/h

...

### Définition du terme de rétroaction *uFB*

Le terme de rétroaction *uFB* sert à faire tendre la température *T2* vers la température de consigne *Tc*.

Selon l'invention, afin de convertir les demandes de variation de température dans l'unité de commande de l'actionneur (débit massique exprimé par exemple en kg/h), le calcul suivant est utilisé :

$$uFB = \frac{TFB}{GFB}$$

avec :

- *TFB* : demande de variation de température permettant de faire tendre la température *T2* vers la température de consigne *Tc*. *TFB* est fonction de la température *T2* et de la température de consigne *Tc*
- *GFB* : gain instantané à appliquer à l'instant courant pour convertir la demande de variation de température *TFB* en débit d'hydrocarbures *uFB*. En particulier, on peut prendre *GFB* = *Ginst.*.

Le calcul du terme *TFB* est basé sur une modélisation physique du catalyseur d'oxydation. Ce calcul est réalisé par un contrôleur dont les paramètres sont déterminés au moyen d'un modèle physique du catalyseur d'oxydation, basé sur un bilan d'énergie d'une phase gaz et un bilan d'énergie d'une phase solide. Un exemple de modèle physique du catalyseur d'oxydation est présenté ci-après.

Un tel modèle se base sur le bilan d'énergie d'une phase gaz et le bilan d'énergie d'une phase solide. Ces bilans d'énergie s'obtiennent en équilibrant les échanges d'énergie dans un volume de contrôle selon le principe suivant : le taux de variation de l'énergie stockée dans le volume de contrôle est égale à la différence entre le taux de variation de l'énergie entrante dans le volume de contrôle et le taux de variation de l'énergie sortante du volume de contrôle.

Plusieurs formulations existent. Elles sont passées en revue dans le document suivant :

C. Depcik, D. Assanis, One-dimensional automotive catalyst modeling, Progress In Energy Combustion and Science., vol. 31, 2005, pp 308-369.

Le principe est le suivant :

Le bilan énergétique en phase gaz s'écrit :

$$A + B = C$$

où

- $A$ est le terme de stockage d'énergie en phase gaz. Il est conservé dans notre exemple mais peut être très petit et donc parfois négligé. Il s'écrit couramment

$$A = \rho g\ Cpg\ \varepsilon\ \frac{\partial T}{\partial t}$$

- $B$ est le terme de transport d'énergie en phase gaz lié au déplacement du gaz lui-même. Il s'écrit couramment

$$B = \rho g\ Cpg\ v\ \frac{\partial T}{\partial z}$$

- $C$ est un terme d'échange d'énergie entre la phase gaz et la phase solide. Il s'écrit couramment

$$C = hg\ Ga\ (Tm - T)$$

Le bilan énergétique en phase solide s'écrit :
-
- $$Am = Cm + Dm + Em + Fm$$

- $Am$ est le terme de stockage d'énergie en phase solide. Il s'écrit couramment

$$Am = (1 - \varepsilon)\rho m\ Cpm\ \frac{\partial Tm}{\partial t}$$

- $Cm$ est un terme d'échange d'énergie entre la phase gaz et la phase solide. Il s'écrit couramment comme l'opposé du terme $C$

$$Cm = hg\ Ga\ (T - Tm)$$

- $Dm$ est un terme d'échange d'énergie par conduction dans la phase solide. Il est négligé dans notre exemple mais peut être pris en compte si nécessaire. Il s'écrit couramment

$$Dm = (1 - \varepsilon)\ km\ \frac{\partial^2 Tm}{\partial z^2}$$

- *Em* est un terme représentant l'enthalpie produite ou absorbée par l'aspect exothermique ou endothermique des réactions se produisant dans le catalyseur d'oxydation. Il s'écrit couramment

$$Em = Gca \sum_{j=1}^{NM} Rj\ hj$$

- *Fm* est un terme d'échange thermique avec le milieu extérieur. Il représente couramment les « pertes thermiques ». Il est négligé dans notre exemple mais pourrait être inclus s'il s'avérait nécessaire. Il s'écrit

$$Fm = -h\infty\ \ As\infty\ \ (Tm - T\infty)$$

avec :

- $T$ : température locale du gaz. Dans le document précité de Depcik, la notation $Tg$ est adoptée à la place de la notation $T$.
- $Tm$ : température locale du solide.
- $\rho g$ : masse volumique du gaz.
- $\rho m$ : masse volumique du solide.
- $Cpg$ : capacité calorique du gaz.
- $Cpm$ : capacité calorique du solide.
- $\varepsilon$ : fraction de vide du pain catalytique.
- $v$ : vitesse représentative de la vitesse du gaz dans les canaux du pain catalytique. Dans le document précité de Depcik, la notation $u$ est adoptée à la place de la notation v.
- $z$ : variable de la dimension axiale du pain catalytique. Dans le document précité de Depcik, la notation $x$ est adoptée à la place de la notation $z$.
- $hg$ : coefficient d'échange convectif d'enthalpie entre le gaz et le solide.
- $Ga$ : coefficient représentatif de la surface d'échange entre le gaz et le solide.
- $km$ : coefficient d'échange conductif du solide.
- $Gca$ : coefficient représentatif de la surface d'échange entre le gaz et la surface catalytique.
- $NM$ : nombre d'espèces chimiques prises en considération dans les réactions catalytiques.
- $Rj$ : taux de réaction de l'espèce j.
- $hj$ : enthalpie de réaction de l'espèce j.
- $h\infty$ : coefficient d'échange convectif d'enthalpie entre le solide et le milieu ambiant.
- $As\infty$ : surface extérieure du solide en contact avec le milieu ambiant.
- $T\infty$ : température représentative de la température du milieu ambiant.

Selon un exemple de réalisation, on utilise un modèle basé sur les équations de bilan précédentes, simplifiées en ne prenant en compte que les termes $A$, $B$, $C$, $Am$ et $Cm$, puis normalisées de la manière suivante

$$(\text{sys}) : \begin{aligned} \frac{\partial T}{\partial t} + v\,\frac{\partial T}{\partial z} &= -k1\ (T - Tm) \\ \frac{\partial Tm}{\partial t} &= k2\ \ (T - Tm) \end{aligned}$$

avec

$$k1 = \frac{hg\ Ga}{\varepsilon\ \rho g\ \ Cpg}$$

$$k2 = \frac{hg\ \ Ga}{(1-\varepsilon)\ \rho m\ \ Cpm}$$

Ainsi, les paramètres de ce modèle physique simplifié sont :

- $k1$, $k2$ deux constantes caractéristiques du catalyseur d'oxydation

- Les paramètres géométriques du catalyseur permettant le calculer la vitesse $v$ à partir du débit $Q$

- La longueur $L$.

- Le rendement $r$ (qui peut être une fonction de $v$)

- La variable d'adaptation $Lu$

Les entrées de ce modèle physique simplifié sont

- Le débit massique de gaz $Q$.

- La température $T1$ en amont du catalyseur d'oxydation.

- Le débit d'hydrocarbures de commande $u$ (débit d'hydrocarbures présents en amont du catalyseur d'oxydation et corrigé du rendement).

Le terme $Em$ qui décrit la génération d'enthalpie par l'oxydation des espèces chimiques telles que les hydrocarbures n'est pas pris en compte directement dans le modèle physique simplifié. On note que la prise en compte des hydrocarbures se fait à travers le modèle simplifié mais en utilisant une longueur $Lu$. L'obtention de cette longueur $Lu$ par la méthode décrite en annexe est similaire à la prise en compte du terme $Em$.

Dans la méthode selon l'invention les paramètres $k1$ et $k2$ sont calculés ou bien identifiés en utilisant la réponse indicielle expérimentale à une variation de $T1$. Cette réponse est donnée de manière analytique par la formule (EQREP) donnée en annexe 1 qui correspond à la résolution du système d'équations (sys) pour une entrée échelon de $T1$ et pour un catalyseur de longueur $L$. Cette réponse est schématisée sur la figure 7 en tant que $T1\_SR$.

Le paramètre $Lu$ est un paramètre de réglage qui permet d'assimiler la réponse indicielle à $HC$ à une réponse indicielle à $T1$ sur une longueur fictive $Lu$. $Lu$ peut notamment être une fonction de $v$.

Le paramètre $Lu$ est utilisé pour le calcul de $uFB$ dans l'adaptation des paramètres des contrôleurs.

Une particularité de l'invention consiste à proposer une méthode pour adapter automatiquement les paramètres de ces contrôleurs en fonction des conditions opératoires du moteur. Plusieurs structures classiques de contrôle sont envisagées pour le calcul du $TFB$ :

- Le contrôleur de type proportionnel intégral (PI)

- Le contrôleur de type intégral simple

- Le contrôleur de type modèle interne

- Le contrôleur de type prédicteur de Smith

Ces méthodes sont détaillées en annexe 2.

La figure 4 illustre schématiquement un contrôleur avec modèle interne $MU$ utilisé alternativement dans la méthode selon l'invention.

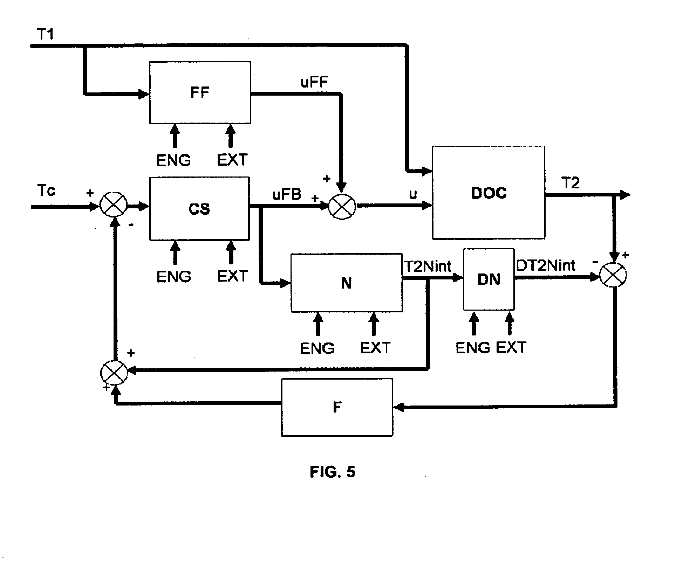

La figure 5 illustre schématiquement un contrôleur de type prédicteur de Smith représentant un cas particulier du contrôleur présenté sur la figure 4.

La figure 6 illustre schématiquement un contrôleur avec modèle interne *M* utilisé alternativement dans la méthode selon l'invention.

Prenons par exemple le contrôleur le plus courant : le contrôleur PI. Ce contrôleur possède 2 paramètres.

Dans une approche classique, le choix de ces paramètres se fait de la manière suivante. Le moteur est placé dans une condition de fonctionnement donnée. Les 2 paramètres sont réglés (optimisés) "à la main" (ou de manière automatique) en essayant plusieurs combinaisons de réglage. Une combinaison de réglage est arrêtée. Le moteur est placé dans une autre condition fonctionnement. Une nouvelle combinaison de réglage est arrêtée. Et ainsi de suite pour chacune des conditions de fonctionnement du moteur. Cette approche soulève de nombreux problèmes. D'abord elle nécessite beaucoup de temps pour effectuer cette calibration. Ensuite, la cohérence des résultats entre les différents réglages n'est pas forcément assurée. Enfin, cette approche ne donne les valeurs des réglages que lorsque le moteur est sur un point stationnaire : quelle valeur adopter lorsque le moteur passe d'une condition opératoire à une autre ?

Selon l'invention, on y remédie en exprimant la valeur des paramètres du contrôleur à l'aide d'un nombre très limité de paramètres du modèle physique. A partir de ces paramètres, on calcule automatiquement par des formules (données en annexe 2) les valeurs $\tau c$ et $\delta c$ correspondant à la constante de temps et au retard pur d'un système de premier ordre retardé. Connaissant par ailleurs le gain, on en déduit par les formules connues de l'homme du métier les paramètres Kp et $\tau i$ du contrôleur PI en fonction des conditions opératoires.

L'invention concerne également un moteur à combustion interne comprenant un système de traitement de gaz d'échappement. Le moteur **(10),** en particulier un moteur Diesel, débite des gaz d'échappement dans une ligne d'échappement **(20).** Le système comprend un catalyseur d'oxydation **(15)** et un filtre à particules **(16)** placés dans la ligne d'échappement. Le catalyseur d'oxydation est placé en amont du filtre à particules. Des éléments tels qu'une turbine **(30)** ou une prise de recirculation des gaz d'échappement **(40)** peuvent être présents entre le moteur et le catalyseur d'oxydation. Le système inclut un système d'injection **(80)** agissant dans le moteur et piloté par un système de contrôle **(50).** Alternativement, le système de contrôle peut agir sur un système d'injection annexe **(85)** injectant directement dans la ligne d'échappement entre le moteur et le catalyseur d'oxydation. Le système de contrôle selon l'invention est adapté à la mise en oeuvre des procédés selon l'invention, en ce qu'il agit sur le système d'injection pour fournir un débit d'hydrocarbures souhaité en amont du catalyseur d'oxydation, selon les lois de commande de l'invention.

Le système inclut préférentiellement un capteur de température **(17)** en amont du catalyseur d'oxydation qui fournit une valeur de température *T1* représentative de la température des gaz en amont du catalyseur d'oxydation. Alternativement, la grandeur *T1* peut être construite en utilisant l'information d'autres capteurs disponibles dans le moteur et la ligne d'échappement.

Le système inclut préférentiellement un capteur de température **(18)** en aval du catalyseur d'oxydation qui fournit une valeur de température *T2* représentative de la température des gaz en amont du filtre à particules. Alternativement, la grandeur *T2* peut être construite en utilisant l'information d'autres capteurs disponibles. Cette grandeur *T2* est la grandeur que vise à rapprocher le système de contrôle d'une température désirée *Tc* par la méthode de la présente invention.

Le système de contrôle peut prendre en compte les conditions ambiantes **(90)** et les conditions opératoires **(11)** du moteur.

**Annexe 1 : Gains, valeurs *k1, k2, Lu* et r**

Introduction des gains G, *Ginst,* et *Kd*

Le gain stationnaire *G* est défini comme le rapport entre la valeur stationnaire d'une variation de *T2* et la valeur stationnaire de la variation correspondante de débit massique d'hydrocarbures *u* ayant induit cette variation de *T2,* tous les autres paramètres (notamment *T1* et *Q*) restant constants par ailleurs.

$$G = \frac{\Delta T2}{r \ \Delta QHC1}$$

$\Delta$ exprime une variation par rapport à une valeur de référence quelconque.

Le gain stationnaire *G* peut être calculé en prenant en compte notamment l'enthalpie de réaction des hydrocarbures oxydés dans le catalyseur d'oxydation, le débit de gaz entrant dans le catalyseur d'oxydation, la température *T1*, la capacité calorifique de ce gaz, le rendement *r*, les conditions ambiantes *EXT* et les conditions opératoires du moteur *ENG*. En particulier, le gain stationnaire *G* peut être estimé par la formule suivante :

$$G = \frac{\Delta h}{Q \; Cpg},$$

où $\Delta h$ est l'enthalpie de la réaction d'oxydation des hydrocarbures oxydés par unité de masse d'hydrocarbures oxydés et s'exprime préférentiellement en kJ/kg.

La valeur du gain instantané *Ginst* est la valeur du gain à appliquer à l'instant courant. Cette valeur peut être prise égale à la valeur du gain stationnaire *G*. Alternativement, elle peut être prise égale à la valeur gain stationnaire *G* corrigée par une fonction de la dérivée filtrée du débit de gaz traversant le catalyseur. En particulier, *Ginst* est défini de la manière suivante :

$$Ginst = \frac{G}{1 - K_B \; \frac{1}{Q} \; f\left(\frac{dQsat}{dt}\right)}$$

où *Qsat* = *min(max(Q,lmnQ),lmxQ)*, *lmnQ* étant une valeur positive quelconque préférentiellement égale à 0 et *lmxQ* étant une valeur positive quelconque strictement supérieure à *lmnQ*; $K_B$ étant une valeur quelconque ; *f* étant un filtre avec une fonction passe-bas ; *f* étant préférentiellement un filtre de type premier ordre dont la constante de temps vaut préférentiellement 1/*k2*.

<u>Introduction des valeurs *k1* et *k2*</u>

Les valeurs *k1* et *k2* sont des valeurs caractéristiques du catalyseur d'oxydation.

Elles peuvent être identifiées à l'aide de la formule *EQREP* en mesurant *T2* lors d'une variation échelon de *T*1.

$$T2(t) = \mathbf{H}\left(t - \frac{L}{v}\right)\mathbf{exp}\left(-\frac{k1 \; L}{v}\right) \times$$

$$EQREP \; : \; \left(1 + \int_0^{t-L/v} \mathbf{exp}(-k2 \; \tau)\sqrt{\frac{k1 \; k2 \; L}{v \; \tau}}\mathbf{I1}\left(2\sqrt{\frac{k1 \; k2 \; L}{v}}\tau\right)d\tau\right)$$

où **H** est la fonction échelon définie par $\mathbf{H}(t) = \begin{cases} 1 \text{ si } t \geq 0 \\ 0 \text{ si } t < 0 \end{cases}$ ; *t* représente le temps ; I1 est la fonction de Bessel modifiée de première espèce définie par $\mathrm{I1}(x) = \frac{x}{2}\sum_{k=0}^{\infty}\frac{\left(\frac{z^2}{4}\right)^k}{k! \; \Gamma(2+k)}$ ; $\Gamma$ est la fonction gamma.

La vitesse $v$ est la vitesse moyenne du gaz dans les canaux du catalyseur d'oxydation et est calculée préférentiellement par la formule $v = \dfrac{Q}{\rho g\ S}$, où *S* représente la section moyenne du catalyseur traversée par le gaz de masse volumique moyenne. ρ*g*.

Les valeurs *k1* et *k2* peuvent être identifiées à toute forme équivalente de cette formule.

Alternativement, elles peuvent être calculées à l'aide des formules suivantes

$$k1 = \frac{hg\ Ga}{\varepsilon\ \rho g\ Cpg}$$

$$k2 = \frac{hg\ Ga}{(1-\varepsilon)\ \rho m\ Cpm}$$

*Ga* est le rapport géométrique surface sur volume représentatif de la surface d'échange entre le gaz et le solide.

*hg* coefficient d'échange convectif d'enthalpie entre le gaz et solide

ε est la fraction de vide du pain catalytique

ρ*g* est la masse volumique moyenne du gaz

ρ*m* est la masse volumique moyenne du solide

*Cpg* est la capacité calorique moyenne du gaz

*Cps* est la capacité calorique moyenne du solide

Pour les définitions détaillées des valeurs, on peut se reporter à la publication suivante : C. Depcik, D. Assanis, One-dimensional automotive catalyst modeling, Progress In Energy Combustion and Science., vol. 31, 2005, pp 308-369.

Introduction de Lu

En se basant sur des résultats expérimentaux, on peut établir que les réponses à des variations de *T*1 et à des variations de débit d'hydrocarbures sont différentes (FIG. 7).

En adaptant la longueur du catalyseur d'oxydation dans l'expression de la réponse indicielle normalisée à une variation de *T*1, on obtient une réponse très similaire à la réponse indicielle normalisée à une variation de débit d'hydrocarbures (FIG. 8), tous les autres paramètres restants égaux par ailleurs. On définit la longueur *Lu* comme la longueur de catalyseur d'oxydation permettant de rapprocher au mieux d'une part la réponse à une variation de *T*1 sur un catalyseur de longueur *Lu*, et d'autre part la réponse indicielle à une variation de débit d'hydrocarbures sur un catalyseur d'oxydation de longueur *L*.

On note que la notion de longueur différente entre *L* et *Lu* est équivalente à la notion de temps de réponse différent entre la réponse à une variation de *T*1 et la réponse à une variation de débit d'hydrocarbures.

Les variations de *T*1 sont considérées comme des perturbations. La stratégie de précompensation consiste à synchroniser les effets des variations de *T*1 sur *T*2 avec les effets des variations de débit d'hydrocarbures *u* sur *T*2 afin de rejeter les effets des variations de *T*1 (FIG. 9). Le calcul du retard de synchronisation est réalisé dans toutes les conditions opératoires.

Introduction du rendement *r*

De manière classique, le rendement *r* est défini comme le rapport entre le débit d'hydrocarbures consommés dans le catalyseur d'oxydation et le débit total d'hydrocarbures *u* en amont du catalyseur d'oxydation.

$$r = \frac{u - QHC2}{u}\ ;$$ la valeur *u* est le débit d'hydrocarbures présents en amont du catalyseur d'oxydation ; la valeur *QHC2* est le débit d'hydrocarbures présents en aval du catalyseur d'oxydation.

Il est communément constaté que, dans la gamme de température nécessaire pour effectuer une régénération, le rendement dépend essentiellement du débit de gaz traversant le catalyseur d'oxydation et est décroissant avec le débit $Q$ , tel qu'illustré dans la FIG. 10.

**Annexe 2 : Calcul de *TFB***

**1. Contrôleur de type proportionnel intégral (PI)**

Une première méthode consiste à calculer *TFB* à l'aide d'un contrôleur PI défini de la façon suivante :

- Entrée : *Tc-T2*
- Sortie : *V*
- Fonction de transfert :

$$Kp\left(1+\frac{1}{\tau i\ s}\right)$$

*s* étant la variable de Laplace ;
Kp et $\tau i$ étant les paramètres du contrôleur PI.

On calcule alors *TFB* comme la valeur *V* limitée selon l'équation :

$$TFB = \mathbf{max}\big(\mathbf{min}(V, \text{lim\_max}), \text{lim\_min}\big)$$

Les valeurs *lim_max* et *lim_min* sont définies de manière à prendre en compte les contraintes physiques du système.
Un algorithme d'anti-emballement est préférentiellement utilisé en supplément.
En particulier, les paramètres *Kp* et $\tau i$ du contrôleur PI peuvent être adaptés avec le débit de gaz, en se basant sur la constante de temps $\tau c$, le retard $\delta c$ et le gain *Ginst* d'un système de premier ordre retardé, à l'aide des réglages automatiques de Tavakoli-Fleming ou de Ziegler-Nichols ou de toutes autres formules de réglage automatique de contrôleurs PI basées sur un système de premier ordre retardé. L'homme du métier sait que tous ces réglages expriment *Kp* et $\tau i$ en fonction des paramètres $\tau c$, $\delta c$ et *Ginst.*
En particulier la valeur $\tau c$ est préférentiellement exprimée par

$$\tau c = \frac{aLu}{\mathbf{exp}\big(-2\ k1\ Lu/v\big)\ k2\ \mathbf{I1}\big(2\ k1\ Lu/v\big)}$$

ou alternativement par

$$\tau c = \frac{2}{k2}aLu\sqrt{\pi}\sqrt{\frac{k1\ Lu}{v}}$$

ou alternativement par

$$\tau c = \frac{aLu}{\exp\left(-2\ k2\ \delta pist\right)\ k2\ \mathbf{I1}\left(2\ k2\ \delta pist\right)}$$

ou alternativement par

$$\tau c = \frac{2}{k2}aLu\sqrt{\pi}\sqrt{k2\ \delta pist}$$

En particulier la valeur $\delta c$ est préférentiellement exprimée par

$$\delta c = \frac{Lu}{v} + \frac{1}{k2}\frac{k1\ Lu}{v} - \tau c$$

ou alternativement par

$$\delta c = \delta pist - \tau c$$

ou alternativement par

$$\delta c = \frac{Lu}{v} + \delta pist - \tau c$$

Dans les équations précédentes de $\delta c$ et $\tau c$, la valeur $\delta pist$ est obtenue en résolvant l'équation implicite suivante

$$Lu = \int_{t-\delta pist(t)}^{t} v(w)dw$$

Dans les équations précédentes de $\delta c$ et $\tau c$, la valeur $aLu$ peut être une valeur quelconque et en particulier une valeur proche de 0,45. Alternativement la valeur $aLu$ peut être une valeur évaluée à l'aide de la formule suivante

$$aLu = 1 - \exp\left(-\frac{k1\ Lu}{v}\right)\times$$

$$\left(1+\int\limits_{0}^{\frac{k1\ Lu}{k2\ v}}\exp\left(-k2\ \tau\right)\sqrt{\frac{k1\ k2\ Lu}{v\ \tau}}I1\left(2\sqrt{\frac{k1\ k2\ Lu}{v}}\ \tau\right)d\tau\right)$$

**2. Contrôleur de type intégral simple**

Alternativement, une seconde méthode peut être utilisée pour calculer *TFB* . Le terme *TFB* se calcule à l'aide un contrôleur de type intégrateur simple défini ainsi :

- Entrée : *Tc - T2*
- Sortie : *V*
- Fonction de transfert :

$$\frac{1}{\tau I\ s}$$

*S* étant la variable de Laplace ; $\tau I$ étant le paramètre du contrôleur.

On calcule *TFB* comme la valeur *V* limitée selon l'équation :

$$TFB = \max\left(\min\left(V, \text{lim\_max}\right), \text{lim\_min}\right)$$

Les valeurs lim_max et lim_min sont définies de manière à prendre en compte les contraintes physiques du système.

Un algorithme d'anti-emballement est préférentiellement utilisé en supplément.

La valeur $\tau I$ s'exprime comme une fonction de la valeur $\delta pist$ définie précédemment.

En particulier la valeur $\tau I$ peut être calculée selon la formule $\tau I = 2\ \delta pist$.

Alternativement, $rI$ peut être calculée comme une fonction des valeurs $\tau c$ et $\delta c$ définies précédemment. En particulier, la valeur $\tau I$ peut être calculée selon la formule $\tau I = \delta c + 3\ \tau c$.

**3. Contrôleur de type modèle interne du premier ordre**

Alternativement, et en complément des différentes configurations présentées pour le calcul de *uFF,* le calcul de *TFB* peut se faire de manière classique avec un modèle interne, de préférence selon la configuration présentée dans la FIG. 4, et en calculant la sortie du modèle interne *T2* int de la manière suivante

$$\tau c(t)\ \dot{x}c(t) = -xc(t) + Ginst(t)\ uFB(t)$$

$$T2\,\text{int}(t) = xc\left(t - \delta c(t)\right)$$

avec les valeurs $\tau c$, $\delta c$ et *Ginst* définies précédemment. On définit $\dot{x}$ comme la dérivée de la variable *x* par rapport au temps t.

Le terme *TFB* se calcule à l'aide de la sortie d'un système dynamique *CT* dont la sortie est V et dont l'entrée est la différence entre la consigne *Tc* et *TA* ; *TA* étant la différence filtrée entre la température *T2* et la sortie *T2* int d'un modèle interne d'entrée *uFB*. Le terme *TFB* correspond à la sortie limitée de *CT* selon l'équation

$$TFB = \mathbf{max}\big(\mathbf{min}(V, \text{lim\_max}), \text{lim\_min}\big)$$

les valeurs lim_max et lim_min étant définies de manière à prendre en compte les contraintes physiques du système.

Le système dynamique *CT* est choisi de manière classique dans la synthèse d'un contrôleur à modèle interne de type premier ordre retardé. En particulier, il assure le rejet de perturbations additives constantes en sortie et le suivi de la consigne *Tc*. Le système dynamique *CT* est une fonction des conditions opératoires *ENG* ou des conditions ambiantes *EXT*. En particulier *CT* peut être choisi comme un scalaire de valeur 1.

Le bloc C de la figure 4 est composé du bloc CT précédemment défini en série avec l'inverse du gain *Ginst.*

## 4. Contrôleur de type prédicteur de Smith

De manière équivalente à la commande par modèle interne avec un modèle interne de type premier ordre retardé décrite précédemment, le calcul de *TFB* peut se faire de manière classique avec un contrôleur de type prédicteur de Smith, de préférence selon la configuration présentée dans la FIG. 5, et en calculant la sortie d'un modèle de premier ordre retardé utilisant $\tau c$, $\delta c$ et *Ginst* pour paramètres. La sortie du modèle de premier ordre non retardé (bloc N) est donnée par *T2N* int = *xc* avec $\tau c(t)\ \dot{x}c(t) = -xc(t) + Ginst(t)\ uFB(t)$. La sortie du modèle de premier ordre retardé *DT2N* int correspond à la valeur *T2N* int retardée par l'opérateur retard *DN* d'un retard de valeur $\delta c(t)$. Elle est donnée par $DT2N\ \text{int}(t) = T2N\ \text{int}(t - \delta c(t))$. Un filtre de robustesse *F* est préférentiellement utilisé dans la structure du prédicteur de Smith. En particulier, ce filtre peut être un filtre de type premier ordre.

Le terme *TFB* se calcule préférentiellement à l'aide un contrôleur PI d'entrée *Tc - T2N int - F(T2 - DT2NINT)* et de sortie *V* ; la fonction de transfert du contrôleur PI étant $Kp\left(1 + \dfrac{1}{\tau i\ s}\right)$ ; *S* étant la variable de Laplace ;

*Kp* et $\tau i$ étant les paramètres du contrôleur PI ; Le paramètre *Kp* vaut de préférence 1 et le paramètre $\tau i$ vaut de préférence $\tau c$ défini précédemment.

On calcule *TFB* comme la valeur *V* limitée selon l'équation

$$TFB = \mathbf{max}\big(\mathbf{min}(V, \text{lim\_max}), \text{lim\_min}\big)$$

Les valeurs lim_max et lim_min sont définies de manière à prendre en compte les contraintes physiques du système.

Un algorithme d'anti-emballement est préférentiellement utilisé en supplément.

Le bloc *CS* de la figure 5 correspond au terme *TFB* calculé comme décrit précédemment et transformé en débit d'hydrocarbures *uFB* à l'aide du gain *Ginst*.

## 5. Contrôleur de type Modèle interne du type Erf_u

En complément des différentes configurations présentées pour le calcul de *uFF*, le calcul de *TFB* peut se faire de manière classique avec un modèle interne, de préférence selon la configuration présentée dans la FIG. 4, et en calculant la sortie du modèle interne *T2int* à l'instant *t* à l'aide de la valeur de sortie *T2* int à l'instant $t_N$ ; $t_i$ étant le i-ème échantillon de la valeur du temps t courant depuis un temps initial $t_0$ ; i tant un entier naturel positif ; l'ordre des échantillons respectent l'écoulement du temps *t* de telle sorte que pour $N > i > 0$ on a $t_N > t_i > t_{i-1} > t_0$ ; $t_N$ étant l'échantillon de *t* le plus récent. La valeur de sortie $T2\text{int}(t_N)$ à l'instant $t_N$ se calcule pour $N \geq 1$ suivant

$$T2\text{int}(t_N) = Ginst(t_0)\ uFB(t_0) + \sum_{n=1}^{N} A_n T_n(t_N)$$

$$A_n = Ginst(t_{N-n+1})\ uFB(t_{N-n+1})\ -Ginst(t_{N-n})\ uFB(t_{N-n})$$

$$T_n(t_N) = \frac{1}{2}\left(1 - \mathbf{erf}\left(\frac{\zeta_n}{2\sqrt{\tau_n}}\right)\right)\mathbf{H}(t_N - t_n)$$

$$\zeta_n = Lu - \int_{t_{N-n}}^{t_N}\frac{k2}{k1}v(s)ds$$

$$\tau_n = \int_{t_{N-n}}^{t_N}\frac{k2}{k1^2}v^2(s)ds$$

où **erf** est la fonction d'erreur définie par $\mathbf{erf}(x) = \dfrac{2}{\sqrt{\pi}}\displaystyle\int_0^x e^{-\omega^2}d\omega$. En particulier, on utilise préféren-tiellement $T2\mathrm{int}(t) = T2\mathrm{int}(t_N)$ avec $t \geq t_N$.

La sortie du modèle interne $T2\mathrm{int}$ peut aussi être calculée par toute approximation des formules ci-dessus. En particulier, on peut utiliser l'approximation qui consiste à tronquer la somme à un nombre limité $D$ de termes à l'aide de la formule

$$T2\mathrm{int}(t) = Ginst(t_{N-D})\ uFB(t_{N-D}) + \sum_{n=1}^{D}A_nT_n(t_N)$$

### 6. Contrôleur de type Modèle interne du premier ordre u + T1

Alternativement, et en complément des différentes configurations présentées pour le calcul de *uFF,* le calcul de *TFB* peut se faire de manière classique avec un modèle interne de type deux entrées et une sortie, de préférence selon la configuration présentée dans la FIG. 6, et en calculant la sortie du modèle interne *T2* int de la manière suivante.

$$T2\mathrm{int}(t) = xd\big(t - \delta d(t)\big) + xe\big(t - \delta c(t)\big),$$

où les valeurs $\delta c$ et $\tau c$ sont décrites précédemment, la valeur *xe* est décrite par $\tau c(t)\ xe(t) = -xe(t) + Ginst(t)\ u(t)$, et la valeur *xd* est décrite par $\tau d(t)\ xd(t) = -xd(t) + Kd(t)\ (T1(t) - Tbar)$ avec les valeurs $\delta d, \tau d, Kd$ et $\delta$ *pist* définies de la manière suivante :

La valeur $\tau d$ est préférentiellement donnée par

$$\tau d = \frac{aL}{\exp(-2\ k1\ L/v)\ k2\ \mathbf{I1}(2\ k1\ L/v)}$$

ou alternativement par

$$\tau d = \frac{2}{k2} aL\sqrt{\pi}\sqrt{\frac{k1\ L}{v}}$$

ou alternativement par

$$\tau d = \frac{aL}{\exp(-2\ k2\ \delta pistL)\ k2\ \mathbf{I1}(2\ k2\ \delta pistL)}$$

ou alternativement par

$$\tau d = \frac{2}{k2} aL\sqrt{\pi}\sqrt{k2\ \delta pistL}$$

La valeur $\delta d$ est préférentiellement donnée par

$$\delta d = \frac{L}{v} + \frac{1}{k2}\frac{k1\ L}{v} - \tau d$$

ou alternativement par

$$\delta d = \delta pistL - \tau d$$

ou alternativement par

$$\delta d = \frac{L}{v} + \delta pistL - \tau d$$

La valeur $\delta pistL$ est préférentiellement donnée par résolution de l'équation implicite suivante

$$L = \int_{t-\delta pistL(t)}^{t} v(w)\,dw$$

La valeur $aL$ peut être une valeur quelconque et en particulier une valeur proche de 0,45. Alternativement la valeur $aL$ peut être une valeur évaluée à l'aide de la formule suivante

$$aL = 1 - \exp\left(-\frac{k1\ L}{v}\right) \times$$

$$\left(1 + \int_{0}^{\frac{k1\ L}{k2\ v}} \exp(-k2\ \tau)\sqrt{\frac{k1\ k2\ L}{v\ \tau}}\ \mathrm{I1}\left(2\sqrt{\frac{k1\ k2\ L}{v}}\ \tau\right) d\tau\right)$$

Le terme $TFB$ se calcule à l'aide de la sortie d'un système dynamique $CT$ défini précédemment. En particulier $CT$ peut être choisi comme un scalaire de valeur 1.

Le bloc $C$ de la figure 6 est composé du bloc $CT$ précédemment défini en série avec l'inverse du gain $Ginst$.

**7. Contrôleur de type Modèle interne de type type Erf_u + Erf_T**

Alternativement, et en complément des différentes configurations présentées pour le calcul de $uFF$, le calcul de $TFB$ peut se faire de manière classique avec un modèle interne de type deux entrées et une sortie, de préférence selon la configuration présentée dans la FIG. 6, et en calculant la sortie du modèle interne $T2$int à l'aide des sorties $xq$ et $xp$ de deux modèles intermédiaires ; dans ces modèles, $t_i$ étant le i-ème échantillon de la valeur du temps $t$ courant depuis un temps initial $t_0$ ; i étant un entier naturel positif ; l'ordre des échantillons respectent l'écoulement du temps $t$ de telle sorte que pour $N > i > 0$ on a $t_N > t_i > t_{i-1} > t_0$; $t_N$ étant l'échantillon de $t$ le plus récent. La valeur de sortie $xq$ à l'instant $t_N$ se calcule pour $N \geq 1$ suivant

$$xq(t_N) = Ginst(t_0)\ u(t_0) + \sum_{n=1}^{N} Aq_n\ T_n$$

$$Aq_n = Ginst(t_{N-n+1})\ u(t_{N-n+1}) - Ginst(t_{N-n})\ u(t_{N-n})$$

$$T_n = \frac{1}{2}\left(1 - \mathrm{erf}\left(\frac{\zeta_n}{2\sqrt{\tau_n}}\right)\right)\mathrm{H}(t_N - t_n)$$

$$\zeta_n = Lu - \int_{t_{N-n}}^{t_N} \frac{k2}{k1} v(s)ds$$

$$\tau_n = \int_{t_{N-n}}^{t_N} \frac{k2}{k1^2} v^2(s)ds$$

et la valeur de la sortie $xp$ à l'instant $t_N$ se calcule pour $N \geq 1$ suivant

$$xp(t_N) = Kd(t_0)\left(T1(t_0) - Tbar\right) + \sum_{n=1}^{N} Ap_n\, T_n$$

$$Ap_n = Kd(t_{N-n+1})\left(T1(t_{N-n+1}) - Tbar\right) - Kd(t_{N-n})\left(T1(t_{N-n}) - Tbar\right)$$

$$T_n = \frac{1}{2}\left(1 - \mathbf{erf}\left(\frac{\zeta L_n}{2\sqrt{\tau_n}}\right)\right) H\left(t_N - t_n\right)$$

$$\zeta L_n = L - \int_{t_{N-n}}^{t_N} \frac{k2}{k1} v(s)ds$$

$$\tau_n = \int_{t_{N-n}}^{t_N} \frac{k2}{k1^2} v^2(s)ds$$

où **erf** est la fonction d'erreur définie par $\mathbf{erf}(x) = \dfrac{2}{\sqrt{\pi}}\int_{0}^{x} e^{-\omega^2} d\omega$. En particulier, on utilise préférentiellement $T2\mathrm{int}(t) = xq(t_N) + xp(t_N)$ avec $t \geq t_N$.

La sortie du modèle interne $T2$ int peut aussi être calculée par toute approximation des formules ci-dessus. En particulier, on peut utiliser l'approximation qui consiste à tronquer la somme à un nombre limité $D$ de termes à l'aide des formules

$$xq(t_N) = Ginst(t_{N-D}) \; u(t_{N-D}) + \sum_{n=1}^{D} Aq_n \; T_n(t_N)$$

$$xp(t_N) = Kd(t_{N-D}) \left( T1(t_{N-D}) - Tbar \right) + \sum_{n=1}^{D} Ap_n \; T_n(t_N)$$

Le terme *TFB* se calcule à l'aide de la sortie d'un système dynamique *CT* défini précédemment. En particulier *CT* peut être choisi comme un scalaire de valeur 1.

Le bloc *C* de la figure 6 est composé du bloc *CT* précédemment défini en série avec l'inverse du gain *Ginst.*

**Revendications**

1. Procédé de traitement de gaz d'échappement d'un moteur à combustion interne équipé d'un filtre à particules (16) et d'un catalyseur d'oxydation (15) placé en amont dudit filtre, dans lequel on contrôle une régénération active dudit filtre au moyen d'un contrôle dynamique d'une température *T2* dudit gaz sortant dudit catalyseur d'oxydation (15), **caractérisée en ce que**:

   i- on détermine une température de consigne *Tc* dudit gaz sortant dudit catalyseur pour assurer une régénération active dudit filtre ;
   ii- on détermine une demande de température nécessaire pour contrôler ladite température *T2* ;
   iii- on détermine un gain stationnaire *G,* défini comme le rapport entre la valeur stationnaire d'une variation de *T2* et une valeur stationnaire d'une variation de débit massique d'hydrocarbures ayant induit ladite variation de *T2* ;
   iv-on corrige ledit gain *G* de façon à prendre en compte une variation de débit de gaz en entrée dudit catalyseur, le gain étant transitoirement augmenté par rapport à *G* pour une augmentation de débit de gaz et transitoirement diminué par rapport à *G* pour une diminution de débit de gaz ;
   v- on définit une loi de commande d'un débit d'hydrocarbures en entrée dudit catalyseur d'oxydation, par le rapport entre ladite demande de température et ledit gain corrigé ;
   vi- on modifie le débit d'hydrocarbures en appliquant la loi de commande pour que la température dudit gaz sortant dudit catalyseur respecte ladite température de consigne.

2. Procédé selon la revendication 1, dans lequel on corrige ledit gain *G* en calculant une dérivée du débit de gaz traversant ledit catalyseur.

3. Procédé selon la revendication 1, dans lequel on corrige ledit gain *G* en appliquant un retard au gain selon la formule suivante :

$$Ginst(t) = G\big(t - D(t)\big)$$

avec *Ginst* le gain corrigé, *D* le retard déterminé en fonction du débit de gaz *Q* et de ses variations, *t* le temps.

4. Procédé de traitement de gaz d'échappement d'un moteur à combustion interne équipé d'un filtre à particules (16) et d'un catalyseur d'oxydation (15) placé en amont dudit filtre, dans lequel on contrôle une régénération active dudit filtre (16) au moyen d'un contrôle dynamique d'une température *T2* dudit gaz sortant dudit catalyseur d'oxydation (15), **caractérisée en ce que** :

   i- on détermine une demande de température *TFF* nécessaire pour compenser un effet d'une variation de température *T1* dudit gaz en entrée dudit catalyseur, *TFF* étant une fonction d'une différence entre $T1(t - \delta(t))$ et une valeur de référence *Tbar,* où $T1(t - \delta(t))$ est une expression d'une mesure de *T1(t)* retardée d'un retard

de valeur $\delta(t)$ ;

ii- on détermine un gain stationnaire *G*, défini comme le rapport entre la valeur stationnaire d'une variation de *T2* et une valeur stationnaire d'une variation de débit massique d'hydrocarbures ayant induit ladite variation de *T2,* tous les autres paramètres restants constants par ailleurs ;

iii- on définit une loi de commande *uFF* d'un débit d'hydrocarbures en entrée dudit catalyseur d'oxydation, par le rapport entre ladite demande de température *TFF* et ledit gain ;

iv- on modifie le débit d'hydrocarbures en appliquant la loi de commande pour que la température dudit gaz sortant dudit catalyseur respecte ladite demande de température *TFF.*

5. Procédé selon la revendication 4, dans lequel le retard $\delta$ est défini en fonction d'un retard $\delta 2$ obtenue en résolvant l'équation implicite suivante :

$$L - Lu = \int_{t-\delta 2(t)}^{t} v(w)\,dw$$

avec

*L* : une longueur du catalyseur d'oxydation.

*Lu* : une longueur de catalyseur d'oxydation permettant de rapprocher au mieux d'une part une réponse indicielle normalisée à une variation de *T1* sur un catalyseur de longueur *Lu,* et d'autre part une réponse indicielle normalisée à une variation de débit d'hydrocarbures sur un catalyseur d'oxydation de longueur *L.*

v : une vitesse moyenne du gaz dans ledit catalyseur d'oxydation.

6. Procédé selon l'une des revendications 4 et 5, dans lequel on corrige ledit gain *G* de façon à prendre en compte une variation de débit de gaz en entrée dudit catalyseur, le gain étant transitoirement augmenté par rapport à *G* pour une augmentation de débit de gaz et transitoirement diminué par rapport à *G* pour une diminution de débit de gaz.

7. Procédé de traitement de gaz d'échappement d'un moteur à combustion interne équipé d'un filtre à particules (16) et d'un catalyseur d'oxydation (15) placé en amont dudit filtre (16), dans lequel on contrôle une régénération active dudit filtre au moyen d'un contrôle dynamique d'une température *T2* dudit gaz sortant dudit catalyseur d'oxydation (15), **caractérisée en ce que** :

i- on détermine une température de consigne *Tc* dudit gaz sortant dudit catalyseur pour assurer une régénération active dudit filtre ;

ii- on détermine une demande de température *TFB* nécessaire pour que la température *T2* dudit gaz sortant dudit catalyseur respecte ladite température de consigne *Tc,* ladite demande *TFB* étant calculée à partir d'un contrôleur dont les paramètres sont déterminés au moyen d'un modèle physique du catalyseur d'oxydation, basé sur un bilan d'énergie d'une phase gaz et un bilan d'énergie d'une phase solide, en fonction des conditions opératoires du moteur ;

iii- on détermine un gain stationnaire *G,* défini comme le rapport entre la valeur stationnaire d'une variation de *T2* et une valeur stationnaire d'une variation de débit massique d'hydrocarbures ayant induit ladite variation de *T2*;

iv- on définit une loi de commande *uFB* d'un débit d'hydrocarbures en entrée dudit catalyseur d'oxydation, par le rapport entre ladite demande de température *TFF* et ledit gain ;

v- on modifie le débit d'hydrocarbures en appliquant la loi de commande pour que la température dudit gaz sortant dudit catalyseur respecte ladite température de consigne.

8. Procédé selon la revendication 7, dans lequel on corrige ledit gain *G* de façon à prendre en compte une variation de débit de gaz en entrée dudit catalyseur, le gain étant transitoirement augmenté par rapport à *G* pour une augmentation de débit de gaz et transitoirement diminué par rapport à *G* pour une diminution de débit de gaz.

9. Procédé selon les revendications 4 et 7, dans lequel ladite loi de commande appliquée pour modifier le débit d'hydrocarbures est définie par la somme desdites lois de commande *uFF* et *uFB.*

10. Procédé selon la revendication 9, dans lequel on corrige ledit gain *G* de façon à prendre en compte une variation de débit de gaz en entrée dudit catalyseur, le gain étant transitoirement augmenté par rapport à *G* pour une augmentation de débit de gaz et transitoirement diminué par rapport à *G* pour une diminution de débit de gaz.

11. Moteur à combustion interne comprenant un système de traitement de gaz d'échappement, un catalyseur d'oxydation (15) placé en amont d'un filtre à particules (16), et un système d'injection (80) agissant dans le moteur, **caractérisé en ce qu'**il comporte un système de contrôle (50) pour piloter ledit système d'injection de façon à fournir un débit d'hydrocarbures en amont du catalyseur d'oxydation, en accord avec un des procédés selon l'une des revendications 1 à 9.

**Patentansprüche**

1. Verfahren zur Behandlung von Abgas eines Verbrennungsmotors, der mit einem Partikelfilter (16) und einem Oxidationskatalysator (15), der stromaufwärts des Filters platziert ist, ausgestattet ist, bei dem man eine aktive Regeneration des Filters mittels einer dynamischen Steuerung einer Temperatur *T2* des Gases, das aus dem Oxidationskatalysator (15) austritt, steuert, **dadurch gekennzeichnet, dass**

   i- man eine Solltemperatur *Tc* des Gases, das aus dem Katalysator austritt, bestimmt, um eine aktive Regeneration des Filters sicherzustellen,
   ii- man eine Temperaturanfrage bestimmt, die erforderlich ist, um die Temperatur *T2* zu steuern,
   iii- man eine stationäre Verstärkung *G* bestimmt, die als das Verhältnis zwischen dem stationären Wert einer Variation von *T2* und einem stationären Wert einer Massestrom-Variation von Kohlenwasserstoffen, die die Variation von *T2* eingeleitet hat, definiert ist,
   iv- man die Verstärkung *G* derart korrigiert, dass eine Variation von Gasdurchfluss am Eingang des Katalysators berücksichtigt wird, wobei die Verstärkung vorübergehend im Vergleich zu *G* für eine Gasdurchflusserhöhung erhöht wird, und vorübergehend im Vergleich zu *G* für eine Gasdurchflussverringerung verringert wird,
   v- man ein Steuergesetz eines Kohlenwasserstoffdurchflusses am Eingang des Oxidationskatalysators im Vergleich zu der Temperaturanfrage und der korrigierten Verstärkung definiert,
   vi- man den Kohlenwasserstoffdurchfluss ändert, indem man das Steuergesetz anwendet, damit die Temperatur des aus dem Katalysator austretenden Gases die Solltemperatur einhält.

2. Verfahren nach Anspruch 1, bei dem man die Verstärkung *G* korrigiert, indem man eine Ableitung des Gasdurchflusses, der den Katalysator durchquert, berechnet.

3. Verfahren nach Anspruch 1, bei dem man die Verstärkung *G* durch Anwenden einer Verzögerung an die Verstärkung gemäß der folgenden Formel korrigiert:

$$Ginst(t) = G(t - D(t))$$

   wobei *Ginst* die korrigierte Verstärkung ist, *D* die in Abhängigkeit von dem Gasdurchfluss *Q* und seinen Variationen bestimmte Verzögerung ist, *t* die Zeit ist.

4. Verfahren zur Behandlung von Abgas eines Verbrennungsmotors, der mit einem Partikelfilter (16) und einem Oxidationskatalysator (15), der stromaufwärts des Filters platziert ist, ausgestattet ist, bei dem man eine aktive Regeneration des Filters (16) mittels einer dynamischen Steuerung einer Temperatur *T2* des Gases, das aus dem Oxidationskatalysator (15) austritt, steuert, **dadurch gekennzeichnet, dass**:

   i- man eine Temperaturanfrage *TFF* bestimmt, die erforderlich ist, um die Wirkung einer Temperaturvariation *T1* des Gases am Eingang des Katalysators zu kompensieren, wobei *TFF* eine Funktion eines Unterschieds zwischen *T1(t-* δ*(t))* und einem Bezugswert *Tbar* ist, wobei *T1(t-* δ*(t))* ein Ausdruck einer Messung von *T1(t)* ist, die mit einer Verzögerung mit dem Wert δ*(t)* verzögert ist,
   ii- man eine stationäre Verstärkung *G* bestimmt, die als das Verhältnis zwischen dem stationären Wert einer Variation von *T2* und einem stationären Wert einer Massestrom-Variation von Kohlenwasserstoffen ist, die die Variation von *T2* eingeleitet hat, definiert ist, wobei ansonsten alle anderen Parameter konstant bleiben,

iii- man ein Steuergesetz *uFF* eines Kohlenwasserstoffdurchflusses am Eingang des Oxidationskatalysators durch das Verhältnis zwischen der Temperaturanfrage *TFF* und der Verstärkung definiert,
iv- man den Kohlenwasserstoffdurchfluss durch Anwenden des Steuergesetzes ändert, damit die Temperatur des Gases, das aus dem Katalysator austritt, die Temperaturanfrage *TFF* einhält.

**5.** Verfahren nach Anspruch 4, bei dem die Verzögerung $\delta$ in Abhängigkeit von einer Verzögerung $\delta2$ definiert ist, die erzielt wird, indem die folgende implizite Gleichung gelöst wird:

$$L - Lu = \int_{t=\delta2(t)}^{t} \nu(w)\,dw$$

wobei:

*L:* eine Länge des Oxidationskatalysators ist,
*Lu:* eine Oxidationskatalysatorlänge ist, die es erlaubt, sich einerseits eine indizieller normierten Reaktion auf eine Variation von *T1* auf einem Katalysator mit der Länge *Lu* und andererseits einer indiziellen normierten Reaktion auf eine Variation des Kohlenwasserstoffdurchflusses auf einem Oxidationskatalysator mit der Länge *L* bestens zu nähern,
v: eine mittlere Geschwindigkeit des Gases in dem Oxidationskatalysator ist.

**6.** Verfahren nach einem der Ansprüche 4 und 5, bei dem man die Verstärkung *G* derart korrigiert, dass eine Gasdurchflussvariation am Eingang des Katalysators berücksichtigt wird, wobei die Verstärkung vorübergehend im Vergleich zu *G* für eine Gasdurchflusserhöhung erhöht wird und vorübergehend im Vergleich zu *G* für eine Gasdurchflussverringerung verringert wird.

**7.** Verfahren zur Behandlung von Abgas eines Verbrennungsmotors, der mit einem Partikelfilter (16), einem Oxidationskatalysator (15), der stromaufwärts des Filters (16) platziert ist, ausgestattet ist, indem man eine aktive Regeneration des Filters mittels einer dynamischen Steuerung einer Temperatur *T2* des Gases, das aus dem Oxidationskatalysator (15) austritt, steuert, **dadurch gekennzeichnet, dass**:

i- man eine Solltemperatur *Tc* des Gases bestimmt, das aus dem Katalysator austritt, um eine aktive Regeneration des Filters sicherzustellen,
ii- man eine Temperaturanfrage *TFB* bestimmt, die erforderlich ist, damit die Temperatur *T2* des Gases, das aus dem Katalysator austritt, die Solltemperatur *Tc* einhält, wobei die Anfrage *TFB* ausgehend von einer Steuervorrichtung berechnet wird, deren Parameter mittels eines physikalischen Modells des Oxidationskatalysators, das auf einer Energiebilanz einer Gasphase und einer Energiebilanz einer Feststoffphase in Abhängigkeit von Betriebsbedingungen des Motors basiert, bestimmt werden,
iii- man eine stationäre Verstärkung *G* definiert, die als das Verhältnis zwischen dem stationären Wert einer Variation von *T2* und einem stationären Wert einer Massestrom-Durchflussvariation von Kohlenwasserstoffen, die die Variation von *T2* eingeleitet hat, bestimmt,
iv- man ein Steuergesetz *uFB* eines Kohlenwasserstoffdurchflusses am Eingang des Oxidationskatalysators durch das Verhältnis zwischen der Temperaturanfrage *TFF* und der Verstärkung definiert,
v- man den Kohlenwasserstoffdurchfluss durch Anwenden des Steuergesetzes ändert, damit die Temperatur des Gases, das aus dem Katalysator austritt, die Solltemperatur einhält.

**8.** Verfahren nach Anspruch 7, bei dem man die Verstärkung *G* derart korrigiert, dass eine Gasdurchflussvariation am Eingang des Katalysators berücksichtigt wird, wobei die Verstärkung vorübergehend im Vergleich zu *G* für eine Gasdurchflusserhöhung erhöht wird, und vorübergehend im Vergleich zu *G* für eine Gasdurchflussverringerung verringert wird.

**9.** Verfahren nach den Ansprüchen 4 und 7, bei dem das Steuergesetz, das angewandt wird, um den Kohlenwasserstoffdurchfluss zu ändern, durch die Summe der Steuergesetze *uFF* und *uFB* definiert ist.

**10.** Verfahren nach Anspruch 9, bei dem man die Verstärkung *G* derart korrigiert, dass eine Gasdurchflussvariation am Eingang des Katalysators berücksichtigt wird, wobei die Verstärkung vorübergehend im Vergleich zu *G* für eine Gasdurchflusserhöhung erhöht wird, und vorübergehend im Vergleich zu G für eine Gasdurchflussverringerung verringert wird.

**11.** Verbrennungsmotor, der ein Abgasbehandlungssystem, einen Oxidationskatalysator (15), der stromaufwärts eines Partikelfilters (16) platziert ist, und ein Einspritzsystem (80), das in dem Motor wirkt, umfasst, **dadurch gekennzeichnet, dass** er ein Steuersystem (50) zum Steuern des Einspritzsystems derart umfasst, dass ein Kohlenwasserstoffdurchfluss stromaufwärts des Oxidationskatalysators in Übereinstimmung mit einem der Verfahren nach einem der Ansprüche 1 bis 9 geliefert wird.

**Claims**

**1.** A method of treating the exhaust gas of an internal-combustion engine equipped with a particulate filter (16) and an oxidation catalyst (15) arranged upstream from said filter, wherein active regeneration of said filter is controlled through dynamic control of a temperature *T2* of said gas leaving said oxidation catalyst (15), **characterized in that** it comprises:

i - determining a setpoint temperature *Tc* for said gas leaving said catalyst so as to provide active regeneration of said filter,
ii - determining a temperature demand necessary for control of said temperature *T2,*
iii - determining a stationary gain *G* defined as the ratio of the stationary value of a variation of *T2* to a stationary value of a hydrocarbon mass flow rate variation that has induced said variation of *T2,*
iv - correcting said gain G so as to take into account a gas flow rate variation at the inlet of said catalyst, the gain being transiently increased in relation to G for a gas flow rate increase and transiently decreased in relation to G for a gas flow rate decrease, v - defining a control law for a hydrocarbon flow rate at the inlet of said oxidation catalyst, through the ratio of said temperature demand to said corrected gain,
vi - modifying the hydrocarbon flow rate by applying the control law so that the temperature of said gas leaving said catalyst meets said setpoint temperature.

**2.** A method as claimed in claim 1, wherein said gain G is corrected by calculating a derivative of the gas flow passing through said catalyst.

**3.** A method as claimed in claim 1, wherein said gain G is corrected by applying a delay to the gain according to the following formula:

$$Ginst(t) = G\bigl(t - D(t)\bigr)$$

with *Ginst* the corrected gain, *D* the delay determined as a function of gas flow rate Q and of its variations, *t* the time.

**4.** A method of treating the exhaust gas of an internal-combustion engine equipped with a particulate filter (16) and an oxidation catalyst (15) arranged upstream from said filter, wherein active regeneration of said filter is controlled through dynamic control of a temperature *T2* of said gas leaving said oxidation catalyst (15), **characterized in that** it comprises:

i - determining a temperature demand *TFF* necessary to compensate for an effect of a variation of temperature *T1* of said gas at the inlet of said catalyst, *TFF* being a function of a difference between *T1(t - δ(t))* and a reference value *Tbar,* where *T1(t - δ(t))* is an expression of a measurement of *T1(t)* delayed by a delay of value δ*(t)* ;
ii - determining a stationary gain G defined as the ratio of the stationary value of a variation of *T2* to a stationary value of a hydrocarbon mass flow rate variation that has induced said variation of *T2,* all the other parameters remaining constant ;
iii - defining a control law *uFF* of a hydrocarbon flow rate at the inlet of said oxidation catalyst, through the ratio of said temperature demand *TFF* to said gain,
iv - modifying the hydrocarbon flow rate by applying the control law so that the temperature of said gas leaving said catalyst meets said temperature demand *TFF.*

5. A method as claimed in claim 4, wherein delay $\delta$ is defined as a function of a delay $\delta 2$ obtained by solving the implicit equation as follows:

$$L - Lu = \int_{t-\delta 2(t)}^{t} v(w)dw$$

with:

> *L:* a length of the oxidation catalyst,
> *Lu:* an oxidation catalyst length allowing to best bring together, on the one hand, a normalized indicial response to a variation of *T1* on a catalyst of length *Lu* and, on the other hand, a normalized indicial response to a hydrocarbon flow rate variation on an oxidation catalyst of length *L,*
> V: a mean velocity of the gas in said oxidation catalyst.

6. A method as claimed in any one of claims 4 and 5, wherein said gain G is corrected so as to take into account a gas flow rate variation at the inlet of said catalyst, the gain being transiently increased in relation to G for a gas flow rate increase and transiently decreased in relation to G for a gas flow rate decrease.

7. A method of treating the exhaust gas of an internal-combustion engine equipped with a particulate filter (16) and an oxidation catalyst (15) arranged upstream from said filter, wherein active regeneration of said filter is controlled through dynamic control of a temperature *T2* of said gas leaving said oxidation catalyst (15), **characterized in that** it comprises:

> i - determining a setpoint temperature *Tc* for said gas leaving said catalyst so as to provide active regeneration of said filter,
> ii - determining a temperature demand *TFB* necessary for temperature *T2* of said gas leaving said catalyst to meet said setpoint temperature *Tc,* said demand *TFB* being calculated from a controller whose parameters are determined by means of a physical model of the oxidation catalyst, based on an energy balance of a gas phase and an energy balance of a solid phase, as a function of the engine operating conditions,
> iii - determining a stationary gain G defined as the ratio of the stationary value of a variation of *T2* to a stationary value of a hydrocarbon mass flow rate variation that has induced said variation of *T2,*
> iv - defining a control law uFB for a hydrocarbon flow rate at the inlet of said oxidation catalyst, through the ratio of said temperature demand *TFF* to said gain,
> v - modifying the hydrocarbon flow rate by applying the control law so that the temperature of said gas leaving said catalyst meets said setpoint temperature.

8. A method as claimed in claim 7, wherein said gain G is corrected so as to take into account a gas flow rate variation at the inlet of said catalyst, the gain being transiently increased in relation to G for a gas flow rate increase and transiently decreased in relation to G for a gas flow rate decrease.

9. A method as claimed in claims 4 and 7, wherein said control law applied to modify the hydrocarbon flow rate is defined by the sum of said control laws uFF and uFB.

10. A method as claimed in claim 9, wherein said gain G is corrected so as to take into account a gas flow rate variation at the inlet of said catalyst, the gain being transiently increased in relation to G for a gas flow rate increase and transiently decreased in relation to G for a gas flow rate decrease.

11. An internal-combustion engine comprising an exhaust gas treatment system, an oxidation catalyst (15) arranged upstream from a particulate filter (16) and an injection system (80) acting in the engine, **characterized in that** it comprises a control system (50) for controlling said injection system so as to provide a hydrocarbon flow rate upstream from the oxidation catalyst, in accordance with one of the methods as claimed in any one of claims 1 to 9.

**FIG. 1**

**FIG. 2**

**FIG. 3**

**FIG. 4**

FIG. 5

FIG. 6

FIG. 7

FIG. 8

**FIG. 9**

**FIG. 10**

**FIG. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7047729 B2

- FR 2921416

**Littérature non-brevet citée dans la description**

- **C. DEPCIK ; D. ASSANIS.** One-dimensional automotive catalyst modeling. *Progress In Energy Combustion and Science,* 2005, vol. 31, 308-369